Europäisches Patentamt

European Patent Office

Office européen des brevets

(11) Publication number: **0 010 973**
**B1**

(19)

(12) **EUROPEAN PATENT SPECIFICATION**

(45) Date of publication of patent specification: **02.06.82**

(51) Int. Cl.³: **F 16 F 15/26, B 63 H 21/30**

(21) Application number: **79302417.5**

(22) Date of filing: **02.11.79**

(54) Apparatus for effecting compensation of free moments resulting from inertia forces in an internal combustion engine.

(30) Priority: **03.11.78 DE 2847770**

(43) Date of publication of application:
**14.05.80 Bulletin 80/10**

(45) Publication of the grant of the patent:
**02.06.82 Bulletin 82/22**

(84) Designated Contracting States:
**BE FR GB IT NL SE**

(56) References cited:
**DE - C - 706 637**
**FR - A - 1 326 059**
**GB - A - 145 345**

**PATENTS ABSTRACTS OF JAPAN, Vol. 2, No. 5,**
**1st January 1978, page 6518 M 77.**

(73) Proprietor: **B & W DIESEL A/S**
**No.2 Torvegade**
**DK-1400 Copenhagen K (DK)**

(72) Inventor: **Lindquist, Henning**
**No. 14 Eskildsvej**
**DK-2990 Niva (DK)**

(74) Representative: **Carpmael, John William Maurice**
**et al,**
**CARPMAELS & RANSFORD 43 Bloomsbury**
**Square**
**London, WC1A 2RA (GB)**

## Apparatus for effecting compensation of free moments resulting from inertia forces in an internal combustion engine

The present invention relates to apparatus for effecting compensation of free moments resulting from inertia forces in an internal combustion engine serving as main or propulsion engine in a ship, said apparatus comprising at least one rotary unbalanced mass and an associated drive motor spaced from the combustion engine in the fore-and-aft direction of the ship, and synchronizing means for controlling the rpm and the phase angle of the drive motor in dependence on the rpm and the phase angle of the combustion engine.

The increasing fuel prices and wages result in a trend towards the use of relatively slow-running main engines, the so-called long stroke engines, with a low number of cylinders, typically between 4 and 6, for ship propulsion. The low engine rpm results in a better economy, inter alia due to the improved engine and propeller efficiency, and the reduced number of cylinders requires less maintenance. In a main engine with few cylinders the oscillating masses produce, however, large free moments of 1st and/or 2nd order, and for obtaining full or partial balancing of these moments, which can induce dangerous or at least unpleasant vibrations in the ship's hull, it is known to provide the engine with moment compensators or balancers each comprising two counterrotating unbalanced masses rotating at the same rpm as the main engine or twice that rpm.

From a Japanese publication entitled "Hull Girder Flexural Vertical Vibration Caused by 2nd Order Unbalanced Moment of Diesel Main Engine" dated August 1978 and published by ISHIKAWAJIMA-HARIMA HEAVY INDUSTRIES CO. LTD. there is, furthermore, known an apparatus which is located at a suitable fore-and-aft spacing from the main engine and which comprises a single rotary unbalanced mass driven by an electric motor and rotating about an athwartships oriented axis at twice the rpm of the main engine, thus creating a pulsating vertical inertia force capable of reducing the engine's 2nd order moments.

A disadvantage of this last-mentioned apparatus is that the dimensions of the electric motor and the associated control system must be very large because the power output of the motor must be sufficient for accelerating or decelerating, respectively, the rotary unbalanced mass in timed relationship with an increase or a decrease, respectively, of the main engine rpm if the unbalanced mass shall function as desired not only when the main engine rotates at constant rpm but also during acceleration and deceleration of the engine. Additionally, a reduction gear is required between the electric motor and the unbalanced mass, which results in an increase of both the cost and the space requirement of the apparatus.

These disadvantages are even greater in ships with low rpm main engines because experience shows that — for a given cylinder output and a given cylinder diameter — the inertia forces of each cylinder and thus the moments of the inertia forces are almost independent of the nominal engine rpm because a lower rpm requires an increased piston stroke and consequently larger oscillating masses. Furthermore, the requirement for a low inherent degree of irregularity of the apparatus calls for a large inertia moment of the unbalanced mass, so that the drive motor must be able to deliver a large output for varying the rpm of that mass.

It is an object of the present invention to eliminate or at least substantially reduce the disadvantage mentioned above and with that object in mind the apparatus of the invention is characterized in that the drive motor of the unbalanced mass or masses is a positive displacement type hydraulic motor which communicates, through a feed conduit and a return conduit, with a positive displacement type hydraulic pump which is adapted to be drivingly connected to the combustion engine.

The invention provides a considerably simpler and cheaper apparatus. Furthermore, the coupling, through the feed and return conduits, between the pump driven by the combustion engine and the unbalanced rotary mass is practically rigid due to the incompressibility of the hydraulic fluid, which ensures that the required synchronization between the engine and the unbalanced mass can be maintained even during extremely rapid acceleration or deceleration of the engine where the relatively resilient nature of an electric coupling as in the prior art, might cause a temporary loss of synchronism. The hydraulic motor can be considerably smaller than an electric motor, and it can be dimensioned to deliver the required output at a low rpm so that it can be directly coupled to the unbalanced mass without any intermediate reduction gearing which also contributes to reducing the space required by the apparatus. Consequently, it is possible to design the apparatus to compensate for 1st order moments which in particular occur in four-cylinder two-stroke engines. This would hardly be possible with the known apparatus driven by an electric motor in view of the required low rpm of the unbalanced mass.

The hydraulic pump may be driven from the camshaft of the combustion engine. This has the advantage that the apparatus can readily be added to an existing propulsion plant, if and when required, because the main engine need not be specifically designed for permitting attachment of the pump.

In a preferred embodiment of the invention the hydraulic motor is a radial plunger type motor which is connected directly to the rotary unbalanced mass. This type of motor is well- suited for delivering a high torque at low rpm of its output shaft.

The drive motor may rotate at the same rpm as the combustion engine and be drivingly connected to a further unbalanced mass through a gear having a gear ratio of 1:2. With this arrangement two pulsating vertical forces for compensating 1st and 2nd order moments, respectively, can be generated in the apparatus.

The axes of rotation of the unbalanced mass or masses may extend in the athwartships direction of the ship. As intimated above this arrangement permits to obtain a satisfactory reduction of the free moments of the inertia forces in the main engine with only one unbalanced mass for each of the moments, the influence of which on the ship's hull is to be dampened.

The invention will now be described in more detail with reference to the accompanying schematical drawings, in which

Fig. 1 is a longitudinal section through the aft part of a ship equipped with an apparatus embodying the present invention, and

Fig. 2 is a section through a modified moment compensator or balancer which can be incorporated in the apparatus.

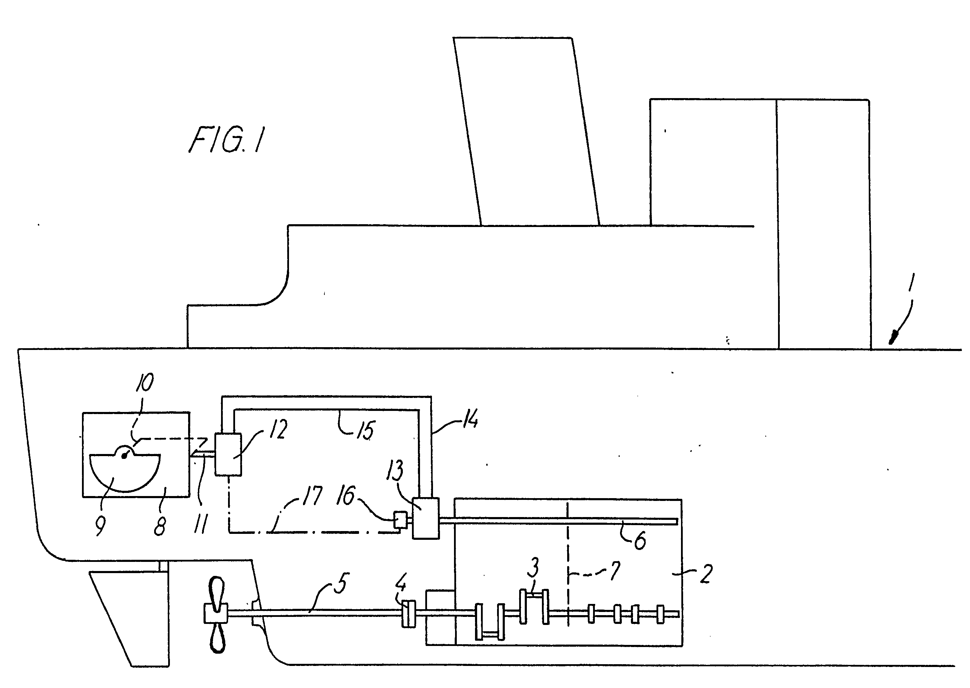

Fig. 1 shows the aft end of a ship 1 in the engine room of which a four-cylinder two-stroke diesel engine 2 is provided for the propulsion of the ship. The schematically shown crankshaft 3 of the engine is drivingly connected to the ship's propeller shaft 5 through a coupling 4. Fig. 1 also shows the control or camshaft 6 of the engine on which are secured cams (not shown) for actuating the fuel pumps and, if any, the valves of the engine cylinders. Camshaft 6 is driven from crankshaft 3 through a chain drive 7.

To the rear of the engine room, e.g. in the steering engine room of the ship, there is located, within a housing a moment compensator or balancer 8 according to the present invention. As will appear from the following description, balancer 8 creates a vertical force which pulsates in synchronism with the inertia forces of engine 2 and which, when its phase angle is suitably controlled, counteracts the vibrations induced in the ship's hull by the free moments of engine 2. The location of balancer 8 adjacent the stern is advantageous in view of the large amplitude of the hull's vibrational mode at this place.

Said pulsating force is created by the motion of an unbalanced mass 9 secured to a shaft 10, which shaft is journalled in the housing of the balancer and extends athwartships. Shaft 10 is driven directly from the output shaft 11 of a hydraulic motor 12, preferably a radial plunger type motor. For the sake of clarity Fig. 1 shows motor 12 located in front of and separated from balancer 8, but normally it will be built together with the balancer, and shafts 10 and 11 will be coaxial.

Camshaft 6 is coupled directly to a hydraulic pump 13 which preferably also is of the radial plunger type, and pump 13 is connected to motor 12 by a closed hydraulic circuit comprising a supply or feed conduit 14 and a return conduit 15. It is evident that the hydraulic circuit may comprise further components (not shown) such as a tank, a pressurizer and suitable means for compensating leakage of hydraulic liquid from the circuit, thermal expansion and contraction of the liquid, etc.

The hydraulic circuit also includes control means for ensuring exact phase synchronization of the rotation of pump 13 and of motor 12, and in Fig. 1 such means is shown schematically by way of a signal transmitter 16 at pump 13 and a control or signal transmitting line 17 from transmitter 16 to motor 12.

As shown in Fig. 1, in which the rpm of mass 9 is equal to the rpm of camshaft 6 and thus to the rpm of crankshaft 3, balancer 8 creates a force which is capable of compensating 1st order moments from engine 2. In engine plants where it is primarily desired to compensate 2nd order moments, there can be used a similar apparatus with a single unbalanced mass 9 and with a hydraulic circuit designed such that the drive motor of the unbalanced mass rotates at twice the rpm of the crankshaft of the main engine.

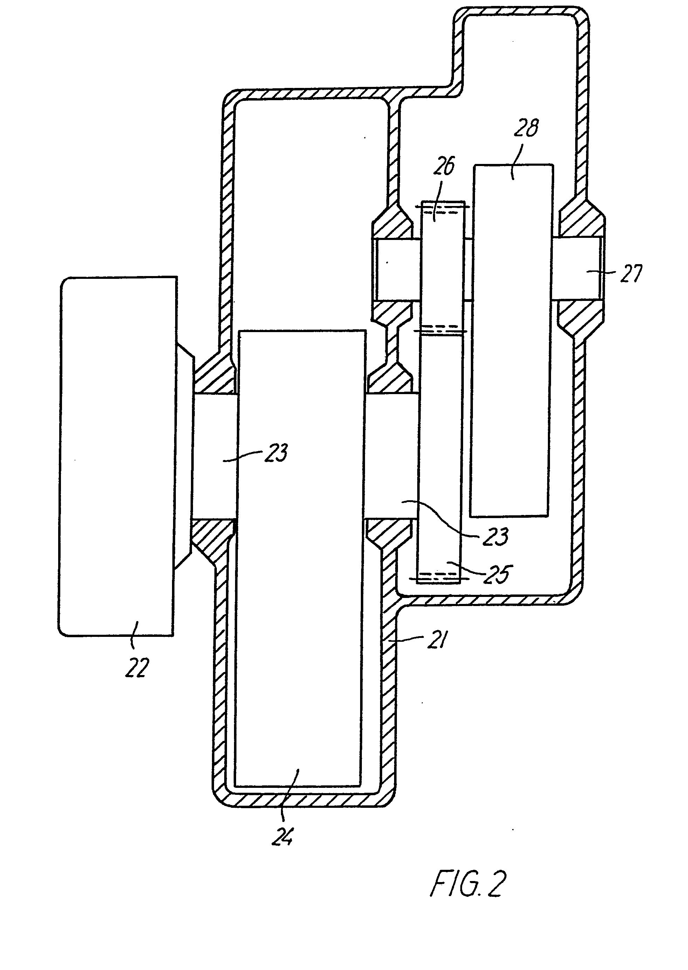

Fig. 2 illustrates a balancer, which with a single hydraulic drive motor and a single hydraulic pump coupled to the combustion engine can compensate both 1st and 2nd order moments. The balancer of Fig. 2 comprises a housing 21 built together with a hydraulic drive motor 22 to the output shaft 23 of which there is secured an unbalanced mass 24 rotating within housing 21. Shaft 23 carries a gear wheel 25 twice as large as a second gear wheel 26 and meshing with that wheel which in turn is secured to a shaft 27 journalled in housing 21 and carrying a second unbalanced mass 28.

Hydraulic motor 22 is incorporated in a hydraulic circuit corresponding to that shown in Fig. 1 so that its output shaft 23 rotates in synchronism with the crankshaft of the combustion engine and with the correct phase angle relationship to the movements of the oscillating masses of the engine. Mass 24 thus rotates at the same rpm as the engine crankshaft and mass 28 rotates twice as fast, whereby these masses create forces capable of compensating 1st and 2nd order moments, respectively, of the inertia forces of the engine.

The invention can also be embodied in an apparatus for compensating pulsating forces created by the ship's propeller. Such apparatus may have a separate hydraulic drive motor supplied from the hydraulic pump driven by the main engine. Alternatively, an extra unbalanced mass can be added to an apparatus as described above, i.e. an apparatus having one or two unbalanced masses for compensating the moments from the main engine, and the extra mass can be coupled to the hydraulic drive motor through a mechanical gearing, the gear ratio of which corresponds to the ratio of the frequency of the propeller forces to the rpm of the hydraulic motor.

It will be understood that in all the embodiments described and mentioned above the pump, which feeds the drive motor of the rotating unbalanced mass or masses, may be driven from any suitable shaft of the main engine, such as the crankshaft or an intermediate shaft of the camshaft drive.

## Claims

1. Apparatus for effecting compensation of free moments resulting from inertia forces in an internal combustion engine (2) serving as main or propulsion engine in a ship (1), said apparatus comprising a unit including at least one rotary unbalanced mass (9, 24, 28) and an associated drive motor (12, 22), which unit is adapted to be mounted in the ship spaced from the combustion engine in the fore-and-aft direction of the ship, and synchronizing means (16, 17) adapted to connect the unit with the engine such as to control the rpm and the phase angle of the drive motor in dependence on the rpm and the phase angle of the engine, characterized in that the drive motor (12, 22) is a positive displacement type hydraulic motor, which communicates, through a feed conduit and a return conduit (14, 15), with a positive displacement type hydraulic pump (13) which is adapted to be drivingly connected to the combustion engine (2).

2. Apparatus as claimed in claim 1, characterized in that the hydraulic pump (13) is adapted to be drivingly connected to the camshaft (6) of the combustion engine (2).

3. Apparatus as claimed in claim 1 or 2, characterized in that the hydraulic motor (12, 22) is a radial plunger type motor which is connected directly to the rotary unbalanced mass (9, 24).

4. Apparatus as claimed in claim 3, characterized in that the hydraulic pump (13) and the drive motor (22) are dimensioned to cause the drive motor (22) to rotate at the same rpm as the combustion engine, and that the drive motor is drivingly connected to a further unbalanced mass (28) through a gearing (25, 26) having a gear ratio of 1:2.

5. The combination of an internal combustion engine (2) and an apparatus for effecting compensation of free moments resulting from inertia forces in the combustion engine (2), which is adapted to be mounted as main or propulsion engine in a ship (1), said apparatus comprising a unit including at least one rotary unbalanced mass (9, 24, 28) and an associated drive motor (12, 22), which unit is adapted to be mounted in the ship spaced from the combustion engine in the fore-and-aft direction of the ship, and synchronizing means (16, 17) between the unit and the combustion engine for controlling the rpm and the phase angle of the drive motor in dependence on the rpm and the phase angle of the combustion engine, characterized in that the drive motor (12, 22) is a positive displacement type hydraulic motor, which communicates, through a feed conduit and a return conduit (14, 15), with a positive displacement type hydraulic pump (13) driven by the combustion engine (2).

6. The combination as claimed in claim 5, characterized in that the hydraulic pump (13) is driven from the camshaft (6) of the combustion engine (2).

7. The combination as claimed in claim 5 or 6, characterized in that the hydraulic motor (12, 22) is a radial plunger type motor which is connected directly to the rotary unbalanced mass (9, 24).

8. The combination as claimed in claim 7, characterized in that the drive motor (22) rotates at the same rpm as the combustion engine and is drivingly connected to a further unbalanced mass (28) through a gearing (25, 26) having a gear ratio of 1:2.

## Patentansprüche

1. Vorrichtung zum Kompensieren freier Momente von Massenkräften in einer Brennkraftmaschine (2), die als Haupt- oder Antriebsmaschine für ein Schiff (1) dient, wobei die Vorrichtung eine Einheit umfasst, die wenigstens eine rotierende Unwuchtmasse (9, 24, 28) und einen zugehörigen Antriebsmotor (12, 22) enthält und die dazu eingerichtet ist, in Längsschiffsrichtung gegenüber der Brennkraftmaschine versetzt in das Schiff eingebaut zu werden, sowie Synchronisationsmittel (16, 17), durch welche die Einheit mit der Maschine kuppelbar ist zwecks Steuerung der Drehzahl und des Phasenwinkels des Antriebsmotors in Abhängigkeit von der Drehzahl und dem Phasenwinkel der Maschine, dadurch gekennzeichnet, dass der Antriebsmotor (12, 22) ein hydraulischer Motor vom Verdrängungstyp ist, der durch eine Vorlauf- und eine Rücklaufleitung (14, 15) mit einer hydraulischen Pumpe (13) vom Verdrängungstyp kommuniziert, die von der Brennkraftmaschine (2) antreibbar ist.

2. Vorrichtung nach Anspruch 1, dadurch gekennzeichnet, dass die hydraulische Pumpe (13) mit der Nockenwelle (6) der Brennkraftmaschine (2) kuppelbar und von dieser Welle antreibbar ist.

3. Vorrichtung nach Anspruch 1 oder 2, dadurch gekennzeichnet, dass der hydraulische Motor (12, 22) ein Radialkolbenmotor ist, der direkt mit der rotierenden Unwuchtmasse (9, 24) gekuppelt ist.

4. Vorrichtung nach Anspruch 3, dadurch gekennzeichnet, dass die hydraulische Pumpe (13) und der Antriebsmotor (22) derartig dimensioniert sind, dass der Antriebsmotor (22) derselben Drehzahl wie die Brennkraftmaschine rotiert, und dass der Antriebsmotor über ein Getriebe (25, 26) mit einem Übersetzungsverhaltnis von 1:2 eine zusätzliche Unwuchtmasse (28) antreibt.

5. Kombination aus einer Brennkraftmaschine (2) und einer Vorrichtung zum Kompensieren freier Momente von Massenkräften in der Brennkraftmaschine (2), die als Haupt- oder Antriebsmaschine in ein Schiff (1) eingebaut werden kann, wobei die Vorrichtung eine Einheit umfasst, die wenigstens eine rotierende Unwuchtmasse (9, 24, 28) und einen zugehörigen Antriebsmotor (12, 22) enthält und die für den Einbau in das Schiff in Längsschiffsrichtung gegenüber der Brennkraftsmaschine versetzt eingerichtet ist, sowie Synchronisationsmittel (16, 17) zwischen der Einheit und der Brennkraftmaschine zur Steuerung der Drehzahl und des Phasenwinkels des Antriebsmotors in Abhängigkeit von der Drehzahl und dem Phasenwinkel der Brennkraftmaschine, dadurch gekennzeichnet, dass der Antriebsmotor (12, 22) ein hydraulischer Motor vom Verdrängungstyp ist, der durch eine Vorlauf- und eine Rücklaufleitung (14, 15) mit einer von der Brennkraftmaschine (2) angetriebenen hydraulischen Pumpe (13) vom Verdrängungstyp kommuniziert.

6. Kombination nach Anspruch 5, dadurch gekennzeichnet, dass die hydraulische Pumpe (13) von der Nockenwelle (6) der Brennkraftmaschine (2) angetrieben wird.

7. Kombination nach Anspruch 5 oder 6, dadurch gekennzeichnet, dass der hydraulische Motor (12, 22) ein Radialkolbenmotor ist, der direkt mit der rotierenden Unwuchtmasse (9, 24) gekuppelt ist.

8. Kombination nach Anspruch 7, dadurch gekennzeichnet, dass der Antriebsmotor (22) mit derselben Drehzahl wie die Brennkraftmaschine rotiert und über ein Getriebe (25, 26) mit einem Übersetzungsverhältnis von 1:2 eine zusätzliche Unwuchtmasse (28) antreibt.

**Revendications**

1. Dispositif pour effectuer une compensation de moments libres résultant de forces d'inertie dans un moteur à combustion interne (2) servant de moteur principal ou de propulsion dans un bateau (1), ledit dispositif comportant une unité comprenant au moins une masse tournante excentrée ou déséquilibrée (9, 24, 28) et un moteur d'entraînement associé (12, 22), ladite unité étant conçue pour être montée dans le bateau à une certaine distance du moteur à combustion interne suivant la direction longitudinale du bateau, et des moyens de synchronisation (16, 17) conçus pour coupler l'unité avec le moteur à combustion interne de manière à commander la vitesse de rotation et l'angle de phase du moteur d'entraînement en fonction de la vitesse de rotation et de l'angle de phase du moteur à combustion interne, caractérisé par le fait que le moteur d'entraînement (12, 22) est un moteur hydraulique du type volumétrique ou à déplacement positif qui communique, par l'intermédiaire d'une conduite d'alimentation et d'une conduite de retour (14, 15), avec une pompe hydraulique (13) du type volumétrique ou à déplacement positif qui est conçue pour être couplée, de façon à être entraînée avec le moteur à combustion interne (2).

2. Dispositif suivant la revendication 1, caractérisé par le fait que la pompe hydraulique (13) est conçue pour être couplée, de façon à être entraînée, à l'arbre à cames (6) du moteur à combustion interne (2).

3. Dispositif suivant la revendication 1 ou 2, caractérisé par le fait que le moteur hydraulique (12, 22) est un moteur du type à pistons radiaux qui est couplé directement à la masse tournante déséquilibrée (9, 24).

4. Dispositif suivant la revendication 3, caractérisé par le fait que la pompe hydraulique (13) et le moteur d'entraînement (22) sont dimensionnés de façon à faire tourner le moteur d'entraînement (22) à la même vitesse que le moteur à combustion interne, et par le fait que le moteur d'entraînement est couplé, de façon à l'entraîner, à une autre masse tournante déséquilibrée (28), par l'intermédiaire d'un train d'engrenages (25, 26) possédant un rapport d'engrenage de 1/2.

5. Combinaison d'un moteur à combustion interne (2) et d'un dispositif pour effectuer une compensation de moments libres résultant de forces d'inertie dans le moteur à combustion interne (2), qui est conçu pour être monté comme moteur principal ou de propulsion dans un bateau (1), ledit dispositif comportant une unité comprenant au moins une masse tournante déséquilibrée (9, 24, 28) et un moteur d'entraînement associé (12, 22), ladite unité étant conçue pour être montée dans le bateau à une certaine distance du moteur à combustion interne suivant la direction longitudinale du bateau, et des moyens de synchronisation (16, 17) entre l'unité et le moteur à combustion interne pour commander la vitesse de rotation et l'angle de phase du moteur d'entraînement en fonction de la vitesse de rotation et de l'angle de phase du moteur à combustion interne, caractérisé par le fait que le moteur d'entraînement (12, 22) est un moteur hydraulique du type à déplacement positif qui communique, par l'intermédiaire d'une conduite d'alimentation et d'une conduite de retour (14, 15), avec une pompe hydraulique (13) du type à déplacement positif entraînée par le moteur à combustion interne (2).

6. Combinaison suivant la revendication 5, caractérisée par le fait que la pompe hydraulique (13) est entraînée par l'arbre à cames (6) du moteur à combustion interne (2).

7. Combinaison suivant la revendication 5 ou 6, caractérisée par le fait que le moteur hydraulique (12, 22) est un moteur du type à pistons radiaux qui est couplé directement à la masse tournante déséquilibrée (9, 24).

8. Combinaison suivant la revendication 7, caractérisée par le fait que le moteur d'entraînement (22) tourne à la même vitesse que le moteur à combustion interne et est couplé, de façon à l'entraîner, à une autre masse déséquilibrée (28) par l'intermédiaire d'un train d'engrenages (25, 26) possédant un rapport d'engrenage de 1/2.

FIG.1

FIG.2